# EUROPEAN PATENT SPECIFICATION

(11) **EP 2 568 412 B1**
(45) Date of publication and mention of the grant of the patent: **13.05.2015**
(21) Application number: 12183584.7
(22) Date of filing: 07.09.2012
(51) Int. Cl.: G06K 7/10

(54) **Apparatus for recognizing character and barcode simultaneously and method for controlling the same**
Vorrichtung zur gleichzeitigen Erkennung von Zeichen und Strichcode und Steuerverfahren dafür
Appareil pour la reconnaissance de caractères et de code-barres simultanément et son procédé de commande

(30) Priority: 08.09.2011 KR 20110091511
(43) Date of publication of application: 13.03.2013
(73) Proprietor: Samsung Electronics Co., Ltd., Suwon-si, Gyeonggi-do, 443-742 (KR)
(72) Inventor: Kim, Sang-Ho, 443-742 Gyeonggi-do (KR); Hwang, Seong-Taek, 443-742 Gyeonggi-do (KR); Park, Jeong-Wan, 443-742 Gyeonggi-do (KR)
(74) Representative: Birchenough, Lewis

(56) References cited:
- WO-A1-2010/123138
- US-A- 4 402 088
- US-A- 4 538 072
- US-A- 5 550 363
- US-A- 5 979 763
- US-A1- 2002 074 405

## Description

### BACKGROUND OF THE INVENTION

### 1. Field of the Invention

The present invention relates generally to an apparatus for recognizing characters and a barcode, and a method for controlling the same. More particularly, although not exclusively, the present invention relates to a mobile communication terminal having a camera module for capturing characters and a bar code, and a method for recognizing characters and a barcode received from the camera module.

### 2. Description of the Related Art

With the increased use of mobile communication terminals, various services are being provided through the display of the mobile communication terminal, including traffic information services that notify a driver of road conditions during driving, ring tone services that enable a user-specific ring tone sound to be registered and used, and mobile call notification services that alert a user of arrival of a voice message in a voice mail box via text. By providing a number of additional services such as voice mail functionality or special information reception functionality through service providers, mobile communication terminals increase user convenience beyond the traditional call functionality.

Recent mobile communication terminals are typically equipped with a camera module for capturing an object and a memory for storing captured images. Therefore, a user may capture an intended scene using a mobile communication terminal.

In addition, Optical Character Recognition (OCR) is under active development as a technology that recognizes characters or a barcode included in a captured image. Specifically, two-dimensional barcodes including more information than conventional one-dimensional barcodes have been developed and are increasingly being used.

Thus, a user may capture an image including characters and a barcode using a camera module of a mobile communication terminal and acquire specific information by recognition of the characters and barcode included in the image.

However, conventional methods for recognizing characters and a barcode, such as the one disclosed in U.S. Patent No. 7,311,256, are limited in that they are typically not capable of simultaneously recognizing characters and a barcode, when both the characters and the barcode appear in an image. That is, according to conventional character and barcode recognition methods, character-only scanning and barcode-only scanning are performed separately for one image. As a result, it takes a long time to acquire information from the entire image.

Further, in conventional methods, a high-resolution image is typically used to recognize characters, whereas a low-resolution image is typically used to recognize a barcode. If both characters and a barcode are recognized from a single high-resolution image, it may take an excessive amount of time to recognize the barcode, or barcode recognition may fail in many cases.

US-4402088-A describes an electronic scanner for scanning both bar code characters and alphanumeric characters to produce a set of electrical signals. The electrical signals are examined by both an alphanumeric optical character reader and a bar code reader and the system outputs a signal indicative of what is read by either the bar code or alphanumeric reader but not both.

US-5550363-A describes an optical information reading apparatus including a two-dimensional image pickup apparatus. The optical information reading apparatus detects, recognizes and decodes a bar code contained in a captured information image.

US-4538072-A describes an optical wand for automatic character recognition including a scanner unit designed to be manually moveable along a line of print in order to recognize optical characters, and a second scanner designed for recognizing bar code marks.

US-5979763-A describes sub-pixel processing of image data representing a dataform - such as a 2D bar code, enabling reading of dataforms including more data/smaller elements, without costly increases in sensor and memory capacity.

WO 2010/123 138 A1 is acknowledged in the preamble of claims 1 and 9.

### SUMMARY OF THE INVENTION

It is an aim of certain embodiments of the present invention to address, solve, mitigate or obviate, at least partly, at least one of the problems and/or disadvantages associated with the prior art, including the above-stated problems and/or disadvantages. Certain embodiments of the present invention aim to provide at least one of the advantages described below. Accordingly, certain embodiments of the present invention provide an apparatus for simultaneously recognizing characters and a bar code, and a method for controlling the same.

According to an aspect of the present invention, there is provided a method for controlling a character and barcode recognition apparatus, comprising: receiving an image including at least one text and at least one barcode; dividing the received image into a text area and a barcode area, the text area including the at least one text and the barcode area including the at least one barcode; recognizing at least one character in the text area by performing character recognition on the text area; recognizing the at least one barcode in the barcode area by performing barcode recognition on the barcode area; and outputting text including a character recognition result and a barcode recognition result by combining the character recognition result with the barcode recognition result.

According to another aspect of the present invention, there is provided a character and barcode recognition apparatus comprising: a capturing unit for capturing and receiving an image including at least one text and at least one barcode; a controller for dividing the image into a text area and a barcode area, the text area including the at least one text and the barcode area including the at least one barcode, recognizing at least one character in the text area by performing character recognition on the text area, and recognizing the at least one barcode in the barcode area by performing barcode recognition on the barcode area; and a combiner for outputting text including a character recognition result and a barcode recognition result by combining the character recognition result with the barcode recognition result.

An exemplary embodiment of the present invention provides a computer program comprising instructions arranged, when executed, to implement a method and/or apparatus, in accordance with any one of the above-described aspects. A further embodiment provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description taken in conjunction with the accompanying drawings, in which:
FIG. 1 is a block diagram of a character and barcode recognition apparatus, according to an embodiment of the present invention;
FIG. 2 is a block diagram of the character and barcode recognition apparatus, according to an embodiment of the present invention;
FIGs. 3A to 3G are diagrams illustrating an operation for recognizing characters and a barcode, according to an embodiment of the present invention;
FIG. 4 is a flowchart illustrating a method for controlling the character and barcode recognition apparatus, according to an embodiment of the present invention;
FIG. 5 is a flowchart illustrating the method for controlling the character and barcode recognition apparatus, according to an embodiment of the present invention; and
FIG. 6 is a flowchart illustrating an operation for combining a character recognition result with a barcode recognition result, according to an embodiment of the present invention.

### DETAILED DESCRIPTION OF EMBODIMENTS OF THE PRESENT INVENTION

Hereinafter, various exemplary embodiments of the present invention are described with reference to the accompanying drawings. The following description is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

In the following description, like reference numerals refer to like elements, features and structures, throughout the drawings. Detailed descriptions of known functions, processes, constructions and structures may be omitted for clarity and conciseness, and to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers or characteristics described in conjunction with a particular aspect, embodiment or example of the present invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Herein, the term "barcode" may be regarded as including any graphical representation of encoded data, including one-dimensional barcodes such as linear barcodes, or two-dimensional barcodes such as matrix barcodes, and further including barcodes of any shape (e.g. square, rectangular, circular etc.), size and colour (e.g. black- and-white, gray-scale, colour etc.). Numerous examples of such barcodes will readily occur to the skilled person.

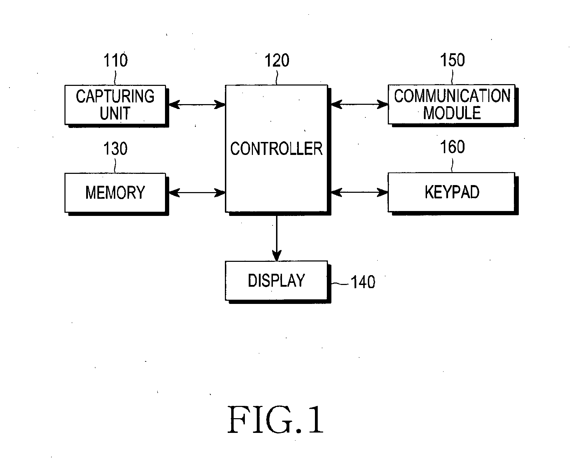

FIG. 1 is a block diagram of a character and barcode recognition apparatus, according to an exemplary embodiment of the present invention. The character and barcode recognition apparatus illustrated in FIG. 1 is configured into a mobile communication terminal equipped with an image capturing means such as a camera module.

Referring to FIG. 1, the character and barcode recognition apparatus includes a capturing unit 110, a controller 120, a memory 130, a display 140, a communication module 150, and a keypad 160.

The capturing unit 110 captures a user-intended scene and converts the captured visible rays into a specific image. The capturing unit 110 includes an image sensor, a lens module, a filter, and a package for accommodating them. The capturing unit 110 may adopt, for example, a Charge Coupled Device (CCD) sensor or a Complementary Metal Oxide Semiconductor (CMOS) sensor as the image sensor. The lens module is implemented, for example, as a spherical or non-spherical surface formed in a transparent material like glass, for forming an optical image by converging or diverging light reflected from an object. The lens module may be implemented, for example, as a software lens or a liquid lens as well as a plastic or glass lens. The filter filters light other than visible rays incident through the lens module. For example, the filter may be an infrared filter.

The capturing unit 110 captures an image composed of at least one character and at least one barcode.

The controller 120 recognizes the character and barcode in the image received from the capturing unit 110. The controller 120 divides the received image into a text area including the character and a barcode area including the barcode. The division is performed based on the structure of the image and is described in more detail below.

The controller 120 performs character recognition in the text area and barcode recognition in the barcode area. When recognizing the character, the controller 120 may use any suitable technique, such as one based on an OCR program or application pre-stored in the memory 130. The OCR program or application is an optical character recognition program that optically recognizes characters displayed or printed in a document. For example, one character may be divided into a plurality of parts or regions (e.g. according to a grid) and read based on the black and white features or line shape features of specific parts or regions of the grid. Character recognition is described in more detail below.

The controller 120 may perform barcode recognition in the barcode area using any suitable barcode recognition technique. The character and barcode recognition apparatus captures, for example, a Quick Response (QR) code, which is a matrix-type two-dimensional code, and recognizes the captured QR code. In addition, the controller 130 reads information from the QR code, for example using a QR code recognition program or application pre-stored in the memory 130.

If a plurality of barcodes are included in a plurality of barcode areas of the image, the controller 120 may recognize the barcodes simultaneously or sequentially.

The controller 120 stores a character recognition result and a barcode recognition result in the memory 130 and/or displays them on the display 140. The controller 120 may store and/or display the character recognition result and the barcode recognition result separately or in combination.

The controller 120 is configured as, but not limited to, a microprocessor, a minicomputer, or an Integrated Circuit (IC) circuit capable of a series of computations.

The memory 130 stores the OCR program or application and the barcode recognition program or application, as described above. The memory 130 also stores the character or barcode recognition result received from the controller 120. In addition, the memory 130 stores programs, applications, or parameters used to control the character and barcode recognition apparatus. The memory 130 is configured with a storage medium which may include a Non-Volatile Memory (NVM) and/or a volatile memory. NVMs include a flash memory card, a Read Only Memory (ROM), and the like, and volatile memories include a Random Access Memory (RAM).

The display 140 may be, for example, a Liquid Crystal Display (LCD) or an Organic Light Emitting Diode (OLED) display. In certain embodiments, the display 140 and the keypad 160 are implemented together into a touch screen (e.g. the keypad may be implemented, at least partly, as a virtual keypad). The display 140 displays the recognition results to a user. It will be understood by those skilled in the art that the display 140 can be implemented in various indication means including visual indication means.

The communication module 150 transmits and receives audio data, character data, video data, and control data. The communication module 150 includes a Radio Frequency (RF) transmitter for up-converting the frequency of a transmission signal and amplifying the up-converted transmission signal, an RF receiver for low-noise-amplifying a received signal and down-converting the frequency of the low-noise-amplified signal, and an antenna. A recognition result is stored in an external memory through the communication module 150, or the internal memory 130. The recognition application or program may be downloaded and updated through the communication module 150.

The keypad 160 receives commands, to control the character and barcode recognition apparatus, from the user. For example, the keypad 160 receives a command to operate the character and barcode recognition program or application. The keypad 160 may be implemented as a key matrix including alphanumerical keys, function keys, and an external volume key, for outputting a key input signal corresponding to a key input by the user to the controller 120. As mentioned above, the keypad 160 and the display 140 may be implemented together into a touch screen.

The controller 120 scans a received full image including at least one character and at least one barcode and divides the received image into a text area and a barcode area. Therefore, the time required to recognize both the character and the barcode is reduced.

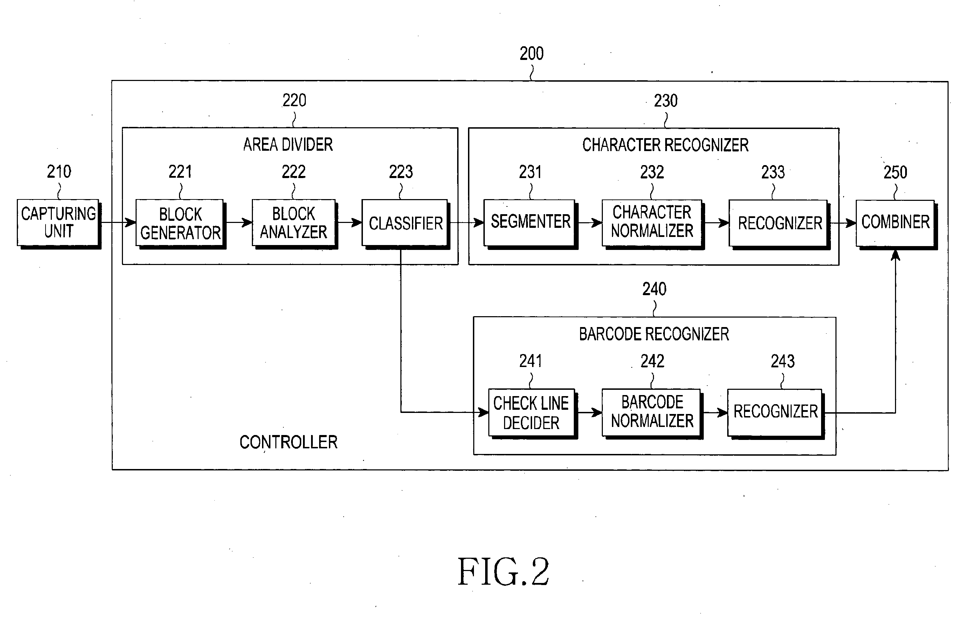

FIG. 2 is a block diagram of the character and barcode recognition apparatus, according to an exemplary embodiment of the present invention. While only a capturing unit 210 and a controller 220 are illustrated in FIG. 2, other components, such as those illustrated in FIG. 1, may also be included.

Referring to FIG. 2, the character and barcode recognition apparatus includes the capturing unit 210 and the controller 200. The controller 200 includes an area divider 220, a character recognizer 230, a barcode recognizer 240, and a combiner 250.

The area divider 220 divides an image including at least one character and at least one barcode, received from the capturing unit 210, into a text area and a barcode area.

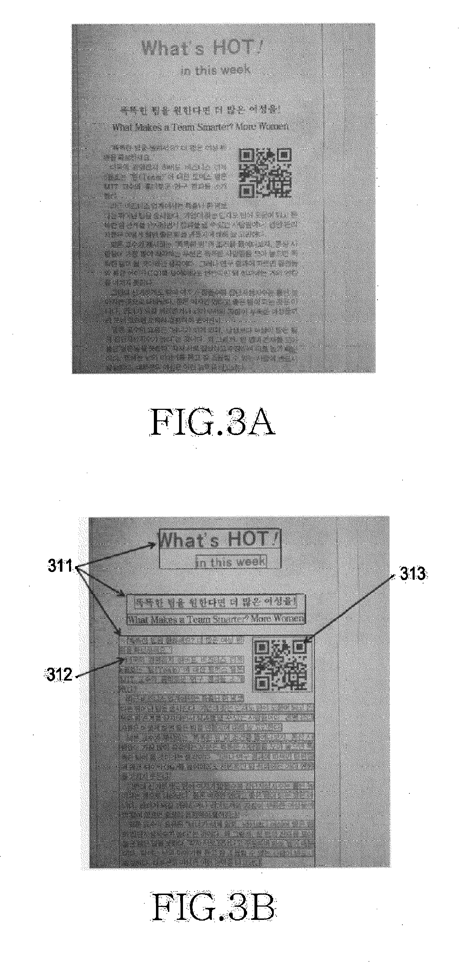

The area divider 220 includes a block generator 221, a block analyzer 222, and a classifier 223. The block generator 221 creates a block (e.g. square or rectangular block) including a set of pixels by extending outermost pixels of a received image. In other words, as illustrated in FIGs. 3A and 3B, the block generator 221 identifies one or more regions of the image, each region comprising a block (e.g. square or rectangular block) of pixels of the image, each region including a portion of text or one or more barcodes.

For example, as illustrated in FIG. 3A, an image captured by the capturing unit 210 includes a plurality of characters and a barcode. The block generator 221 forms a plurality of rectangular blocks, as illustrated in FIG. 3B, by extending the outermost pixels of the image illustrated in FIG. 3A. As illustrated in FIG. 3B, the block generator 221 creates text blocks 311. Further, the block generator 221 divides a text block 311 into text lines 312 and a barcode block 313.

The block analyzer 222 analyzes certain characteristics, such as the sizes, shapes, colors, and positions of the blocks in the image, including the blocks received from the block generator 221. For example, the block analyzer 222 counts the number of pixels, or the pixel range, of an uppermost block including the phrase "What's HOT!" with respect to the entire image in FIG. 3B. The block analyzer 222 analyzes the shape of a block using a pixel range occupied by the block, for example, the numbers of pixels along the width and length of the block. The block analyzer 222 outputs information about the analyzed sizes, shapes, and positions of the blocks to the classifier 223.

The classifier 223 classifies the blocks included in the image into text blocks and barcode blocks based on the analyzed characteristics of the blocks, such as the shapes or colors of the blocks. For example, the classifier 223 may determine whether a block is a barcode block by comparing the width-to-length ratio of the block with pre-stored per-block width-to-length ratios read from a memory (not shown in FIG. 2). Referring to FIG. 3B, for example, if the barcode block 313 includes a QR code as a barcode, the memory stores information indicating that the width-to-length ratio of a QR code is 1:1. The classifier 223 reads the width-to-length ratio of the QR code and classifies a block with a width-to-length ratio of 1:1 as a barcode block.

If the width-to-length ratio of a block is not exactly 1:1, the classifier 223 may, for example, classify the block as a barcode block when the width-to-length ratio of the block is equal to or smaller than a predetermined value and classify the block as a text block when the width-to-length ratio of the block is larger than the predetermined value.

Aside from the QR code type illustrated in FIGs 3A and 3B, the classifier 223 may classify various other barcode types, such as "CODE49," "CODE16K," "PDF417," "DATA CODE," "MAXI CODE," "Veri CODE," "CODEI," "Array Tag," "CP CODE," and "Carla CODE", as barcodes based on per-barcode width-to-length ratios pre-stored in the memory. Barcodes that may be recognized and classified, at least partly, based on color include "ColorCode" and "Color Construct Code".

The classifier 223 defines all text blocks as a text area, and defines all barcode blocks as a barcode area. The text area may be regarded as a single, possibly non-contiguous, region of the image containing one or more characters, or alternatively, may be regarded as comprising one or more separate contiguous areas of the image, each containing one or more characters. Similarly, the barcode area may be regarded as a single, possibly non-contiguous, region of the image containing one or more barcodes, or alternatively, may be regarded as comprising one or more separate contiguous areas of the image, each containing one or more barcodes. The classifier 223 also determines the positions of the text area and the barcode area (e.g. the positions of the one or more text blocks and one or more barcode blocks forming the text area and the barcode area, respectively) based on the per-block position information received from the block analyzer 223.

The classifier 223 outputs the received image and information about the positions of the text area and the barcode area to the character recognizer 230 and the barcode recognizer 240.

The area divider 220 in certain exemplary embodiments compares each pixel with pre-stored character pixel information using a language model and thus divides an image into characters and barcodes. The skilled person will appreciate that the area divider 220 may divide an image into a text area and a barcode area in various manners. It will be apparent to those skilled in the art that a language model-based area division or any other suitable area division may be used, examples of which are known to the skilled person.

The character recognizer 230 may perform processing only the text area in the received image based on the information about the position of the text area to recognize characters in the text area. The character recognizer 230 includes a segmenter 231, a character normalizer 232, and a recognizer 233.

The segmenter 231 segments a string of characters included in the text area into individual characters.

The segmenter 231 separates lines from the text areas by line scanning. Punctuation marks, including commas, periods, colons, semi-colons, and exclamation marks, are recognized by applying connected component labeling to the lines separated by the segmenter 231. The characters separated by punctuations are further separated by spaces.

The segmenter 231 segments characters included in the text area in the above manner and outputs the segmented characters to the character normalizer 232.

The character normalizer 232 normalizes the segmented characters. Specifically, the character normalizer 232 normalizes the positions, sizes, slopes, and bottom lines of the segmented characters and output the normalized characters to the recognizer 233.

The recognizer 222 may recognize information of the normalized characters using any suitable recognition technique, such as template matching, structure analysis, and statistical character recognition.

The recognizer 233 outputs the character recognition result to the combiner 250. However, alternatively to outputting the character recognition result to the combiner 250 by the recognizer 233, the recognizer 233 may store the character recognition result in a memory (not shown in FIG. 2) and/or display it on a display (not shown in FIG. 2).

The recognizer 230 may perform character recognition in the operation described above or by using any suitable scheme, such as various known OCR schemes.

The barcode recognizer 240 recognizes a barcode included in the barcode area using the image and the information about the barcode area received from the classifier 223. The barcode recognizer 240 includes a check line decider 241, a barcode normalizer 242, and a recognizer 243.

The check line decider 241 sets a check line connecting two points of two facing lines among four lines that form the boundary of a barcode in order to determine the center of a binary data cell read from each barcode included in the barcode area.

The check line decider 241 also adds slope information about a barcode (e.g. a two-dimensional code), determines a coefficient of an image position compensated for an image slope, determines coefficients for an image position formula in order to decide the coordinates of the center of each cell compensated for the image slope by adding the slope information about the barcode, determines the coordinates of the center of each cell by applying the determined coefficients, and generates binary data from image data corresponding to the determined center.

The barcode normalizer 242 performs normalization based on the check line in order to decode code information of the barcode. To decode different spatial information of the barcode, the barcode may need to be normalized.

The recognizer 243 decodes and recognizes information included in the barcode using a normalization result received from the barcode normalizer 242. The recognizer 243 outputs the barcode recognition result to the combiner 250 and/or stores and/or displays the barcode recognition result separately from the character recognition result.

The combiner 250 combines the character recognition result received from the recognizer 233 with the barcode recognition result received from the recognizer 243 and stores and/or displays the combination.

The combiner 250 determines whether the character recognition result or the barcode recognition result includes a Uniform Resource Locator (URL) or an e-mail address. If the character recognition result or the barcode recognition result includes a URL or an e-mail address, the combiner 250 combines the character recognition result with the barcode recognition result by adding a Hyper Text Markup Language (HTML) hyperlink tag, for example to the recognition results. If the character recognition result or the barcode recognition result does not include a URL or an e-mail address, the combiner 250 combines the character recognition result with the barcode recognition result by adding an HTML tag, for example to the recognition results.

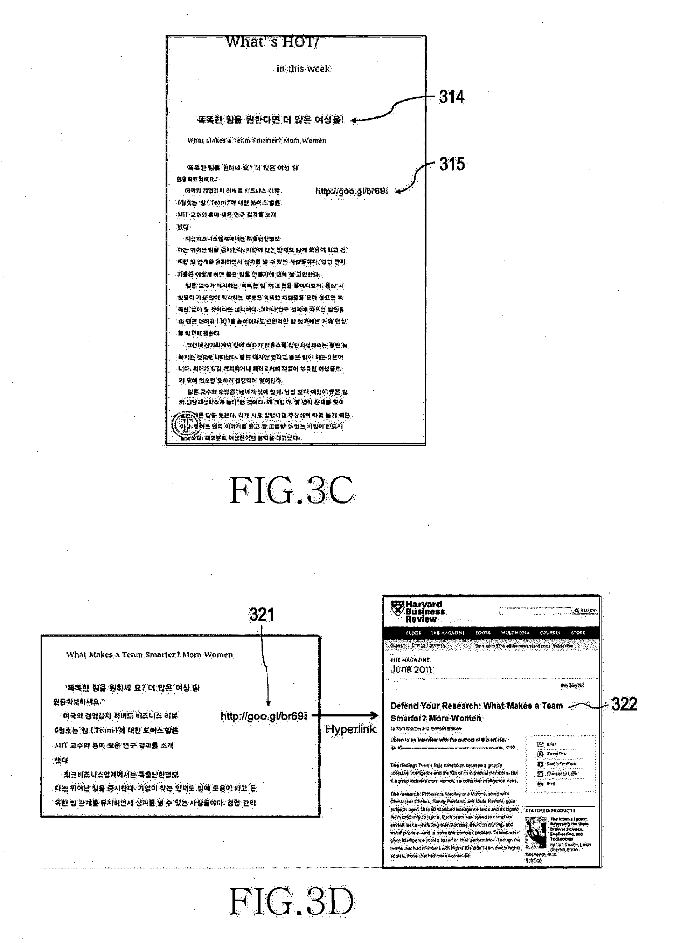

FIG. 3C illustrates an image in which the combiner 250 combines a character recognition result 314 with a barcode recognition result 315, according to an embodiment of the present invention. As illustrated in FIG. 3C, the barcode recognition result 314 is determined to be a URL. Therefore, the barcode recognition result 314 is expressed as an HTML hyperlink tag. Referring to FIG. 3D, a user moves to a homepage 322 of a specific URL by clicking on a barcode recognition result 321.

The character and barcode recognition results are stored or displayed separately, as an alternative to being combined in the combiner 250.

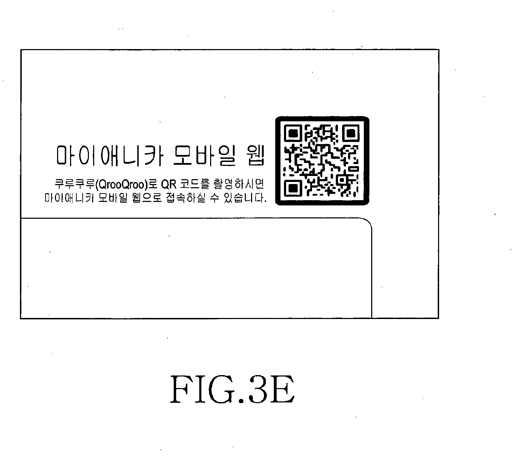

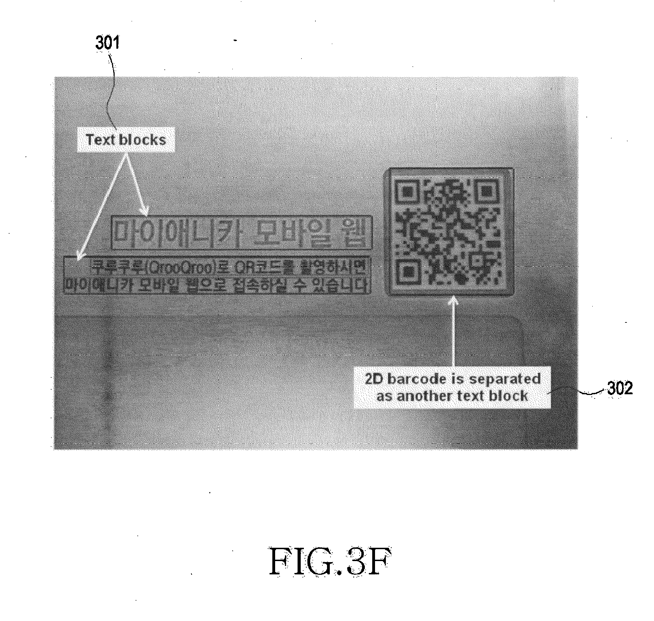

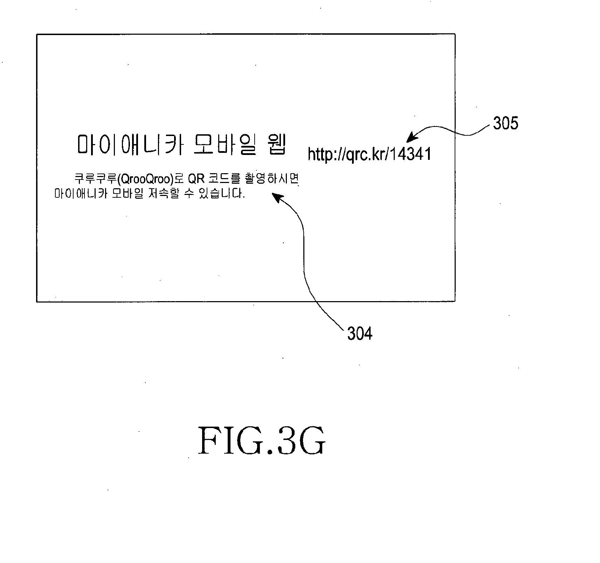

FIGs. 3E, 3F and 3G are diagrams illustrating a character and barcode recognition operation, according to an exemplary embodiment of the present invention.

FIG. 3E illustrates an image captured by the character and barcode recognition apparatus, according to an embodiment of the present invention. The image illustrated in FIG. 3E includes characters and a barcode.

The character and barcode recognition apparatus divides the image of FIG. 3E into blocks. FIG. 3F is a diagram illustrating a result of dividing the image illustrated in FIG. 3E into blocks. Referring to FIG. 3F, the blocks include text blocks 301 and a barcode block 302. Compared to FIG. 3B, in which a barcode block is included in a text block, the text blocks 301 are separated from the barcode block 302. That is, the barcode block 302 is separated as an independent text block and then as a single text line and it is determined whether the single text line is a text area. If the single text line is classified as a barcode based on the features of the text line, barcode recognition is performed.

FIG. 3G illustrates an image in which character and barcode recognition results are combined, according to an embodiment of the present invention. The image includes a character recognition result 304 and a barcode recognition result 305. As described above, if the barcode recognition result is a URL, it may be expressed as an HTML hyperlink tag.

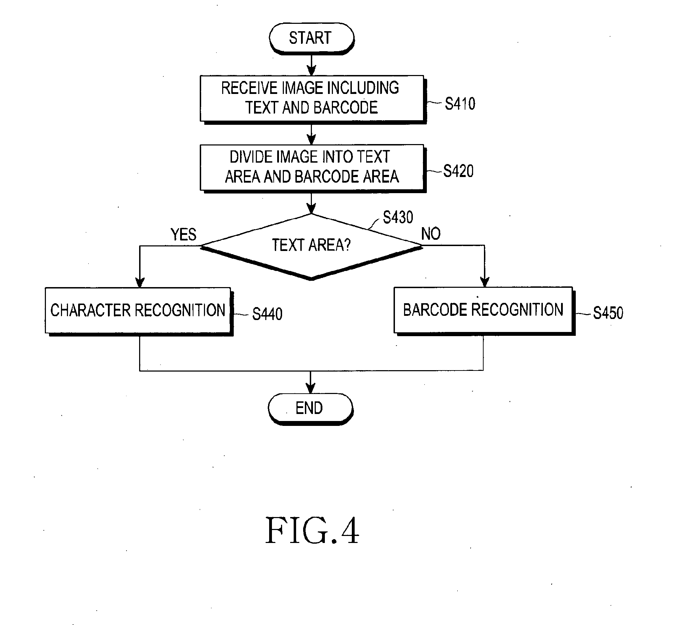

FIG. 4 is a flowchart illustrating a method for controlling the character and barcode recognition apparatus, according to an exemplary embodiment of the present invention.

Referring to FIG. 4, the character and barcode recognition apparatus receives an image including at least one character and at least one barcode, in Step 410.

The character and barcode recognition apparatus divides the received image into a text area and a barcode area, in Step 420. The character and barcode recognition apparatus determines whether an area is the text area, in Step 430. If determining that the area is the text area, the character and barcode recognition apparatus performs character recognition on the area, in Step 440. If determining that the area is the barcode area, the character and barcode recognition apparatus performs barcode recognition on the area, in Step 450.

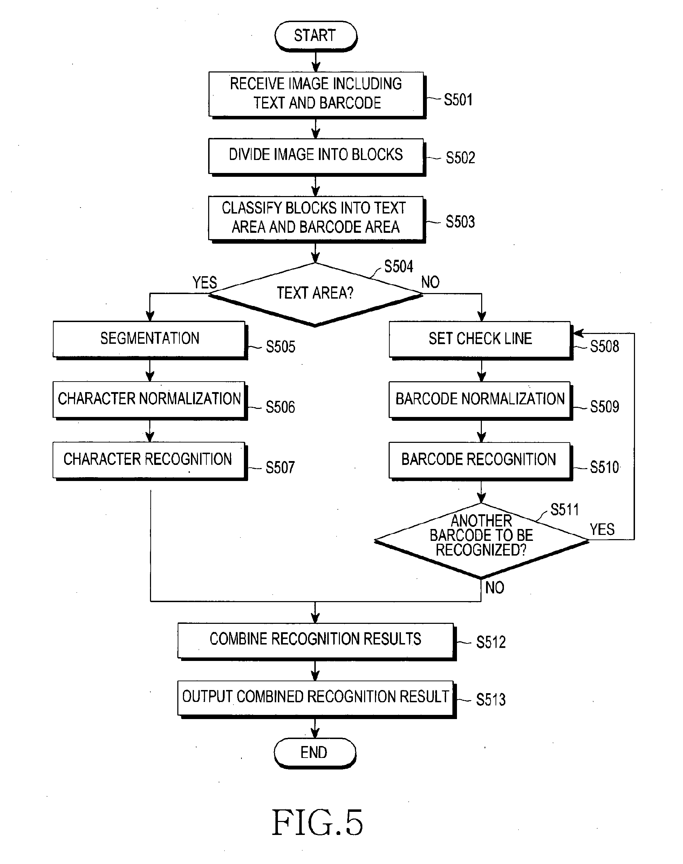

FIG. 5 is a flowchart illustrating the method for controlling the character and barcode recognition apparatus, according to an exemplary embodiment of the present invention.

Referring to FIG. 5, the character and barcode recognition apparatus receives an image including at least one character and at least one barcode, in Step 501.

The character and barcode recognition apparatus divides the received image into blocks, in Step 502. As described above, the character and barcode recognition apparatus divides the image into blocks by extending the outermost pixels of the image, as described above.

The character and barcode recognition apparatus analyzes information about certain characteristics, such as the sizes, shapes, colors and positions, of the blocks. Specifically, the character and barcode recognition apparatus determines whether a block is a text block or a barcode block, based on the analysed characteristics, such as the size, shape or color of the block. The character and barcode recognition apparatus collects the text blocks and barcode blocks and classify the collected text blocks and the collected barcode blocks into a text area and a barcode area, respectively, in Step 503.

The character and barcode recognition apparatus determines whether an area is a text area, in Step 504. If the area is a text area, the character and barcode recognition apparatus segments the text area into individual characters, in Step 505.

The character and barcode recognition apparatus normalizes the individual characters, in Step 506 and recognize the normalized characters, in Step 507.

If the area is a barcode area, the character and barcode recognition apparatus sets a check line in the barcode area, in Step 508. The character and barcode recognition apparatus normalizes the barcode based on the check line, in Step 509. Then the character and barcode recognition apparatus reads information from the barcode by decoding the barcode, in Step 510.

The character and barcode recognition apparatus determines whether there is another barcode in the barcode area, in Step 511. In the presence of another barcode, the character and barcode recognition apparatus performs check line decision, barcode normalization, and barcode recognition on the additional barcode. In the absence of any more barcodes, the barcode recognition procedure ends.

The character and barcode recognition apparatus combines the text recognition result with the barcode recognition result, in Step 512 and outputs the combined recognition result, in Step 513. The text recognition result and the barcode recognition result may be stored and/or displayed separately.

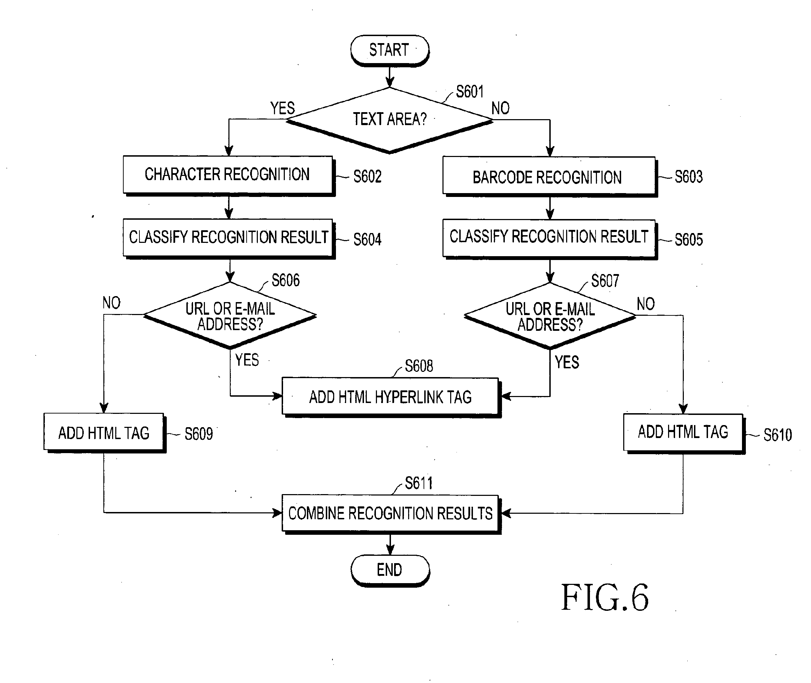

FIG. 6 is a flowchart illustrating an operation for combining a character recognition result with a barcode recognition result, according to an embodiment of the present invention.

Referring to FIG. 6, the character and barcode recognition apparatus determines whether an area is a text area or a barcode area, in Step 601. In the case of the text area, the character and barcode recognition apparatus performs character recognition, in Step 602. In the case of the barcode area, the character and barcode recognition apparatus performs barcode recognition, in Step 603.

The character and barcode recognition apparatus classifies the character recognition result, in Step 604, and thus determines whether the character recognition result is a URL or an e-mail address, in Step 606. If the character recognition result is a URL or an e-mail address, the character and barcode recognition apparatus adds an HTML hyperlink tag, in Step 608. If the character recognition result is not a URL or an e-mail address, the character and barcode recognition apparatus adds an HTML tag, in Step 609.

The character and barcode recognition apparatus classifies the barcode recognition result, in Step 605, and thus determines whether the barcode recognition result is a URL or an e-mail address, in Step 607. If the barcode recognition result is a URL or an e-mail address, the character and barcode recognition apparatus adds an HTML hyperlink tag, in Step 608. If the barcode recognition result is not a URL or an e-mail address, the character and barcode recognition apparatus adds an HTML tag, in Step 610.

The character and barcode recognition apparatus combines the character recognition result with the barcode recognition result, in Step 611.

As described above, the character and barcode recognition apparatus and the method for controlling the same enable simultaneous recognition of a character and a barcode. Therefore, the time taken to read information from an entire image is reduced. Since a low-resolution image is used for barcode recognition, the success rate of barcode recognition is increased.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention has been shown and described with reference to various embodiments thereof, it will be understood by those of ordinary skill in the art that various changes in form and detail may be made therein without departing from the scope of the present invention as defined by the appended claims.

## Claims

1. A method for controlling a character and barcode recognition apparatus, comprising:
receiving (S410) an image including at least one text and at least one barcode;
dividing (S420) the received image into a text area and a barcode area, the text area including the at least one text and the barcode area including the at least one barcode;
recognizing (S440) at least one character in the text area by performing character recognition on the text area;
recognizing (S450) the at least one barcode in the barcode area by performing barcode recognition on the barcode area; **characterized by**
outputting text including a character recognition result and a barcode recognition result by combining (S512) the character recognition result (314) with the barcode recognition result (315).

2. The method of claim 1, wherein dividing (S420) the received image comprises :
dividing (S502) the received image into blocks including the at least one text and blocks including the at least one barcode;
classifying (S503) the blocks into text blocks (311) and barcode blocks (313); and
determining (S504) the text blocks (311) to be the text area and determining (S504) the barcode blocks (313) to be the barcode area.

3. The method of claim 2, wherein classifying (S503) the blocks into text blocks (311) and barcode blocks (313) comprises classifying (S503) the blocks into text blocks (311) and barcode blocks (313) according to one or more characteristics e.g. one or more of shapes, sizes and colors of the blocks.

4. The method of claim 3, wherein classifying (S503) the blocks into text blocks (311) and barcode blocks (313) further comprises:
classifying a block as a barcode block (313), if a width-to-length ratio of the block is equal to or smaller than a predetermined value; and
classifying a block as a text block (311), if a width-to-length ratio of the block is larger than the predetermined value.

5. The method of claim 1, wherein combining (S512) the character recognition result (314) with the barcode recognition result (315) comprises combining (S611) the character recognition result (314) with the barcode recognition result (315) by adding (S608) a Hyper Text Markup Language, HTML, hyperlink tag, if the character recognition result (314) or the barcode recognition result (315) includes a Uniform Resource Locator, URL, or an e-mail address.

6. The method of any preceding claim, wherein recognizing (S440) the at least one character comprises:
segmenting (S505) the text area into individual characters;
normalizing (S506) the individual characters; and
recognizing (S507) the normalized characters.

7. The method of claim 6, wherein recognizing (S506) the normalized characters comprises recognizing the normalized characters by at least one of a template matching scheme, a structure analysis scheme, and a statistical character recognition scheme.

8. The method of any preceding claim, wherein recognizing (S450) the at least one barcode comprises:
setting (S508) a check line in the barcode area;
normalizing (S509) the at least one barcode included in the barcode area based on the check line; and
reading (S510) information included in the barcode based on a result of the barcode normalization.

9. A character and barcode recognition apparatus comprising:
a capturing unit (110) for capturing and receiving (S410) an image including at least one text and at least one barcode;
a controller (120) for dividing (S420) the image into a text area and a barcode area, the text area including the at least one text and the barcode area including the at least one barcode, recognizing (S440) at least one character in the text area by performing character recognition on the text area, and recognizing (S450) the at least one barcode in the barcode area by performing barcode recognition on the barcode area; **characterized by**
a combiner (250) for outputting text including a character recognition result and a barcode recognition result by combining (S512) the character recognition result (314) with the barcode recognition result (315).

10. The character and barcode recognition apparatus of claim 9, wherein the controller (120) comprises:
a block generator (221) for dividing (S502) the image into blocks including the at least one text and blocks including the at least one barcode;
a block analyzer (222) for analyzing one or more characteristics (e.g. one or more of size information, shape information, color information, and position information) of the blocks; and
a classifier (223) for classifying (S503) the blocks into text blocks (311) and barcode blocks (313), determining (S504) the text blocks (311) to be the text area, and determining (S504) the barcode blocks (313) to be the barcode area.

11. The character and barcode recognition apparatus of claim 10, wherein the classifier (223) classifies (S503) the blocks into text blocks (311) and barcode blocks (313) according to the analyzed characteristics e.g. one or more of shapes, sizes and colors of the blocks.

12. The character and barcode recognition apparatus of claim 11, wherein if a width-to-length ratio of a block is equal to or smaller than a predetermined value, the classifier (223) classifies the block as a barcode block (313), and if a width-to-length ratio of a block is larger than the predetermined value, the classifier (223) classifies a block as a text block (311).

13. The character and barcode recognition apparatus of claim 9, wherein the combiner (250) combines (S611) the character recognition result (314) with the barcode recognition result (315) by adding (S608) a Hyper Text Markup Language, HTML, hyperlink tag, if the character recognition result (314) or the barcode recognition result (315) includes a Uniform Resource Locator, URL, or an e-mail address.

## Patentansprüche

1. Verfahren zum Steuern einer Zeichen- und Barcode-Erkennungsvorrichtung, das die folgenden Schritte beinhaltet:
Empfangen (S410) eines Bildes mit wenigstens einem Text und wenigstens einem Barcode;
Unterteilen (S420) des empfangenen Bildes in einen Textbereich und einen Barcode-Bereich, wobei der Textbereich den wenigstens einen Text beinhaltet und der Barcode-Bereich den wenigstens einen Barcode beinhaltet;
Erkennen (S440) wenigstens eines Zeichens in dem Textbereich durch Ausführen von Zeichenerkennung an dem Textbereich;
Erkennen (S450) des wenigstens einen Barcode in dem Barcode-Bereich durch Ausführen von Barcode-Erkennung an dem Barcode-Bereich; **gekennzeichnet durch**
Ausgeben von Text, der ein Zeichenerkennungsergebnis und ein Barcode-Erkennungsergebnis beinhaltet, **durch** Kombinieren (S512) des Zeichenerkennungsergebnisses (314) mit dem Barcode-Erkennungsergebnis (315).

2. Verfahren nach Anspruch 1, wobei das Unterteilen (S420) des empfangenen Bildes Folgendes beinhaltet:
Unterteilen (S502) des empfangenen Bildes in den wenigstens einen Text enthaltende Blöcke und in den wenigstens einen Barcode enthaltende Blöcke;
Klassifizieren (S503) der Blöcke in Textblöcke (311) und Barcode-Blöcke (313); und
Bestimmen (S504) der Textblöcke (311) als Textbereich und Bestimmen (S504) der Barcode-Blöcke als Barcode-Bereich.

3. Verfahren nach Anspruch 2, wobei das Klassifizieren (S503) der Blöcke in Textblöcke (311) und Barcode-Blöcke (313) das Klassifizieren (S503) der Blöcke in Textblöcke (311) und Barcode-Blöcke (313) gemäß einer oder mehreren Charakteristiken, z.B. einer oder mehreren aus Formen, Größen und Farben, der Blöcke beinhaltet.

4. Verfahren nach Anspruch 3, wobei das Klassifizieren (S503) der Blöcke in Textblöcke (311) und Barcode-Blöcke (313) ferner Folgendes beinhaltet:
Klassifizieren eines Blocks als Barcode-Block (313), wenn ein Breite/Länge-Verhältnis des Blocks gleich oder kleiner ist als ein vorbestimmter Wert; und
Klassifizieren eines Blocks als Textblock (311), wenn ein Breite/Länge-Verhältnis des Blocks größer ist als der vorbestimmte Wert.

5. Verfahren nach Anspruch 1, wobei das Kombinieren (S512) des Zeichenerkennungsergebnisses (314) mit dem Barcode-Erkennungsergebnis (315) das Kombinieren (S611) des Zeichenerkennungsergebnisses (314) mit dem Barcode-Erkennungsergebnis (315) durch Addieren (S608) eines HTML-(Hyper Text Markup Language)-Hyperlink-Tags beinhaltet, wenn das Zeichenerkennungsergebnis (314) oder das Barcode-Erkennungsergebnis (315) einen URL (Uniform Resource Locator) oder eine Email-Adresse beinhaltet.

6. Verfahren nach einem vorherigen Anspruch, wobei das Erkennen (S440) des wenigstens einen Zeichens Folgendes beinhaltet:
Segmentieren (S505) des Textbereichs in individuelle Zeichen;
Normalisieren (S506) der individuellen Zeichen; und
Erkennen (S507) der normalisierten Zeichen.

7. Verfahren nach Anspruch 6, wobei das Erkennen (S506) der normalisierten Zeichen das Erkennen der normalisierten Zeichen durch wenigstens ein Schema aus Template-Matching, Strukturanalyse und statistischer Zeichenerkennung beinhaltet.

8. Verfahren nach einem vorherigen Anspruch, wobei das Erkennen (S450) des wenigstens einen Barcode Folgendes beinhaltet:
Setzen (S508) einer Checklinie im Barcode-Bereich;
Normalisieren (S509) des wenigstens einen in dem Barcode-Bereich enthaltenen Barcode auf der Basis der Checklinie; und
Lesen (S510) von in dem Barcode enthaltenen Informationen auf der Basis eines Ergebnisses der Barcode-Normalisierung.

9. Zeichen- und Barcode-Erkennungsvorrichtung, die Folgendes umfasst:
eine Erfassungseinheit (110) zum Erfassen und Empfangen (S410) eines Bildes mit wenigstens einem Text und wenigstens einem Barcode;
eine Steuerung (120) zum Unterteilen (S420) des Bildes in einen Textbereich und einen Barcode-Bereich, wobei der Textbereich den wenigstens einen Text beinhaltet und der Barcode-Bereich den wenigstens einen Barcode beinhaltet, Erkennen (S440) wenigstens eines Zeichens im Textbereich durch Ausführen von Zeichenerkennung am Textbereich, und Erkennen (S450) des wenigstens einen Barcode im Barcode-Bereich durch Ausführen von Barcode-Erkennung am Barcode-Bereich; **gekennzeichnet durch**
einen Kombinator (250) zum Ausgeben von Text, der ein Zeichenerkennungsergebnis und ein Barcode-Erkennungsergebnis beinhaltet, **durch** Kombinieren (S512) des Zeichenerkennungsergebnisses (314) mit dem Barcode-Erkennungsergebnis (315).

10. Zeichen- und Barcode-Erkennungsvorrichtung nach Anspruch 9, wobei die Steuerung (120) Folgendes umfasst:
einen Blockgenerator (221) zum Unterteilen (S502) des Bildes in den wenigstens einen Text enthaltende Blöcke und in den wenigstens einen Barcode enthaltende Blöcke;
einen Blockanalysator (222) zum Analysieren von einer oder mehreren Charakteristiken (z.B. einer oder mehreren aus Größeninformationen, Forminformationen, Farbinformationen und Positionsinformationen) der Blöcke; und
einen Klassifizierer (223) zum Klassifizieren (S503) der Blöcke in Textblöcke (311) und Barcode-Blöcke (313), Bestimmen (S504) der Textblöcke (311) als Textbereich und Bestimmen (S504) der Barcode-Blöcke (313) als Barcode-Bereich.

11. Zeichen- und Barcode-Erkennungsvorrichtung nach Anspruch 10, wobei der Klassifizierer (223) die Blöcke in Textblöcke (311) und Barcode-Blöcke (313) gemäß den analysierten Charakteristiken, z.B. einer oder mehreren aus Formen, Größen und Farben, der Blöcke klassifiziert (S503).

12. Zeichen- und Barcode-Erkennungsvorrichtung nach Anspruch 11, wobei der Klassifizierer (223), wenn ein Breite/Länge-Verhältnis des Blocks gleich oder kleiner ist als ein vorbestimmter Wert, den Block als Barcode-Block (313) klassifiziert, und der Klassifizierer (223), wenn ein Breite/Länge-Verhältnis eines Blocks größer ist als ein vorbestimmter Wert, einen Block als Textblock (311) klassifiziert.

13. Zeichen- und Barcode-Erkennungsvorrichtung nach Anspruch 9, wobei der Kombinierer (250) das Zeichenerkennungsergebnis (314) mit dem Barcode-Erkennungsergebnis (315) durch Addieren (S608) eines HTML-(Hyper Text Markup Language)-Hyperlink-Tags kombiniert (S611), wenn das Zeichenerkennungsergebnis (314) oder das Barcode-Erkennungsergebnis (315) einen URL (Uniform Resource Locator) oder eine Email-Adresse beinhaltet.

## Revendications

1. Un procédé de commande d'un appareil de reconnaissance de caractères et de codes à barres, comprenant :
la réception (S410) d'une image comprenant au moins un texte et au moins un code à barres,
la division (S420) de l'image reçue en une zone de texte et une zone de code à barres, la zone de texte comprenant le au moins un texte et la zone de code à barres comprenant le au moins un code à barres,
la reconnaissance (S440) d'au moins un caractère dans la zone de texte par l'exécution d'une reconnaissance de caractères sur la zone de texte,
la reconnaissance (S450) du au moins un code à barres dans la zone de code à barres par l'exécution d'une reconnaissance de code à barres sur la zone de code à barres, **caractérisé par**
la production en sortie d'un texte comprenant un résultat de reconnaissance de caractères et un résultat de reconnaissance de code à barres par la combinaison (S512) du résultat de reconnaissance de caractères (314) avec le résultat de reconnaissance de code à barres (315).

2. Le procédé selon la Revendication 1, où la division (S420) de l'image reçue comprend :
la division (S502) de l'image reçue en blocs comprenant le au moins un texte et en blocs comprenant le au moins un code à barres,
le classement (S503) des blocs en blocs de texte (311) et en blocs de code à barres (313), et
la détermination (S504) que les blocs de texte (311) sont la zone de texte et la détermination (S504) que les blocs de code à barres (313) sont la zone de code à barres.

3. Le procédé selon la Revendication 2, où le classement (S503) des blocs en blocs de texte (311) et en blocs de code à barres (313) comprend le classement (S503) des blocs en blocs de texte (311) et en blocs de code à barres (313) selon une ou plusieurs caractéristiques, par exemple une ou plusieurs caractéristiques parmi formes, tailles et couleurs des blocs.

4. Le procédé selon la Revendication 3, où le classement (S503) des blocs en blocs de texte (311) et en blocs de code à barres (313) comprend en outre :
le classement d'un bloc en tant que bloc de code à barres (313) si un rapport largeur sur longueur du bloc est égal ou inférieur à une valeur prédéterminée, et
le classement d'un bloc en tant que bloc de texte (311) si un rapport largeur sur longueur du bloc est supérieur à la valeur prédéterminée.

5. Le procédé selon la Revendication 1, où la combinaison (S512) du résultat de reconnaissance de caractères (314) avec le résultat de reconnaissance de code à barres (315) comprend la combinaison (S611) du résultat de reconnaissance de caractères (314) avec le résultat de reconnaissance de code à barres (315) par l'ajout (S608) d'une balise d'hyperlien HTML, langage de balisage hypertexte, si le résultat de reconnaissance de caractères (314) ou le résultat de reconnaissance de code à barres (315) comprend un localisateur de ressources universel, URL, ou une adresse de courrier électronique.

6. Le procédé selon l'une quelconque des Revendications précédentes, où la reconnaissance (S440) du au moins un caractère comprend :
la segmentation (S505) de la zone de texte en caractères individuels,
la normalisation (S506) des caractères individuels, et
la reconnaissance (S507) des caractères normalisés.

7. Le procédé selon la Revendication 6, où la reconnaissance (S506) des caractères normalisés comprend la reconnaissance des caractères normalisés par au moins un mécanisme parmi un mécanisme de mise en correspondance de modèles, un mécanisme d'analyse de structure et un mécanisme de reconnaissance de caractères statistique.

8. Le procédé selon l'une quelconque des Revendications précédentes, où la reconnaissance (S450) du au moins un code à barres comprend :
la définition (S508) d'une ligne de contrôle dans la zone de code à barres,
la normalisation (S509) du au moins un code à barres inclus dans la zone de code à barres en fonction de la ligne de contrôle, et
la lecture (S510) d'informations incluses dans le code à barres en fonction d'un résultat de la normalisation de code à barres.

9. Un appareil de reconnaissance de caractères et de codes à barres comprenant :
une unité de capture (110) destinée à la capture et à la réception (S410) d'une image comprenant au moins un texte et au moins un code à barres,
un dispositif de commande (120) destiné à la division (S420) de l'image en une zone de texte et une zone de code à barres, la zone de texte comprenant le au moins un texte et la zone de code à barres comprenant le au moins un code à barres, à la reconnaissance (S440) d'au moins un caractère dans la zone de texte par l'exécution d'une reconnaissance de caractères sur la zone de texte, et à la reconnaissance (S450) du au moins un code à barres dans la zone de code à barres par l'exécution d'une reconnaissance de code à barres sur la zone de code à barres, **caractérisé par**
un combineur (250) destiné à la production en sortie d'un texte comprenant un résultat de reconnaissance de caractères et un résultat de reconnaissance de code à barres par la combinaison (S512) du résultat de reconnaissance de caractères (314) avec le résultat de reconnaissance de code à barres (315).

10. L'appareil de reconnaissance de caractères et de codes à barres selon la Revendication 9, où le dispositif de commande (120) comprend :
un générateur de blocs (221) destiné à la division (S502) de l'image en blocs comprenant le au moins un texte et en blocs comprenant le au moins un code à barres,
un analyseur de blocs (222) destiné à l'analyse d'une ou de plusieurs caractéristiques (par exemple une ou plusieurs informations parmi informations de taille, informations de forme, informations de couleur et informations de position) des blocs, et
un classificateur (223) destiné au classement (S503) des blocs en blocs de texte (311) et en blocs de code à barres (313), la détermination (S504) que les blocs de texte (311) sont la zone de texte et la détermination (S504) que les blocs de code à barres (313) sont la zone de code à barres.

11. L'appareil de reconnaissance de caractères et de codes à barres selon la Revendication 10, où le classificateur (223) classe (S503) les blocs en blocs de texte (311) et en blocs de code à barres (313) selon les caractéristiques analysées, par exemple une ou plusieurs caractéristiques parmi formes, tailles et couleurs des blocs.

12. L'appareil de reconnaissance de caractères et de codes à barres selon la Revendication 11, où, si un rapport largeur sur longueur d'un bloc est égal ou inférieur à une valeur prédéterminée, le classificateur (223) classe le bloc en tant que bloc de code à barres (313), et, si un rapport largeur sur longueur d'un bloc est supérieur à la valeur prédéterminée, le classificateur (223) classe le bloc en tant que bloc de texte (311).

13. L'appareil de reconnaissance de caractères et de codes à barres selon la Revendication 9, où le combineur (250) combine (S611) le résultat de reconnaissance de caractères (314) avec le résultat de reconnaissance de code à barres (315) par l'ajout (S608) d'une balise d'hyperlien HTML, langage de balisage hypertexte, si le résultat de reconnaissance de caractères (314) ou le résultat de reconnaissance de code à barres (315) comprend un localisateur de ressources universel, URL, ou une adresse de courrier électronique.
